# EUROPEAN PATENT APPLICATION

(11) **EP 4 364 835 A1**
(43) Date of publication of application: **08.05.2024**
(21) Application number: 22876275.3
(22) Date of filing: 27.09.2022
(51) Int. Cl.: B01F 27/15, B01F 27/96, B01J 19/18

(54) **LIQUID SPRINKLING DEVICE AND REACTION APPARATUS USING SAME**

(30) Priority: 29.09.2021 JP 2021160169
(71) Applicant: Kansai Chemical Engineering Co., Ltd., Amagasaki-shi, Hyogo 660-0053 (JP); Bio-energy Corporation, Amagasaki-shi, Hyogo 660-0053 (JP)
(72) Inventor: NODA, Hideo, Amagasaki-shi, Hyogo 660-0053 (JP); HAMA, Shinji, Amagasaki-shi, Hyogo 660-0053 (JP); MUKAIDA, Tadahiro, Amagasaki-shi, Hyogo 660-0053 (JP)
(74) Representative: Clements, Andrew Russell Niel
(86) International application number: PCT/JP2022/036036
(87) International publication number: WO 2023/054409

(57) **Abstract**

A liquid sprinkling device of the present invention includes a rotating shaft disposed in a vertical direction, and at least one liquid flowing member attached to the rotating shaft. In this liquid sprinkling device, the liquid flowing member includes an outlet located on an upper side, an inlet located on a lower side, and a tubular channel extending between the outlet and the inlet, and the tubular channel is bent so that the outlet is pointed toward the lower side.

## Description

### Technical Field

The present invention relates to a liquid sprinkling device and a reaction apparatus using the same.

### Background Art

In recent years, oils and fats have been gaining attention as raw materials to be converted into fuels and chemicals. In particular, active attempts are being made to synthesize long-chain fatty acid esters from animal oils and fats and/or vegetable oils and fats through chemical reactions and utilize the synthesized long-chain fatty acid esters as biodiesel fuel that is interchangeable with light oil.

On the other hand, for reaction systems with two or more liquid phases in which phase transfer catalysts or slurry catalysts are used, technologies for synthesizing various compounds through reactions such as asymmetric synthesis reactions have been gaining attention. Many of these reactions are accelerated through vigorous agitation of the reaction system.

Two-liquid-phase reactions may be employed, for example, in production of biodiesel fuel. An example thereof is an enzyme-catalyzed transesterification reaction in which an enzyme such as lipase is used as a catalyst. A liquid enzyme or an enzyme (immobilized enzyme) immobilized on a carrier such as an ion-exchange resin is used as the enzyme for such an enzyme-catalyzed transesterification reaction. Because a culture solution is concentrated and refined and is then used as the liquid enzyme, the liquid enzyme is less expensive than the immobilized enzyme. The enzyme remains in an aqueous solution of glycerin, which is produced as a byproduct in the aforementioned transesterification reaction, and thus this solution can be used for a reaction in a following batch. This makes it possible to reuse the liquid enzyme repeatedly and reduce the cost for the production of biodiesel fuel (Non-Patent Document 1).

In a transesterification reaction in which a liquid enzyme is used, a two-phase system that includes an oil layer and a water layer is used, and an emulsion is formed through, for example, high-speed agitation of reactants. Here, a considerable amount of energy load needs to be applied to the agitator during the high-speed agitation of the reactants. Meanwhile, to increase the industrial productivity, there has been a desire to reduce the amount of energy required for an operation such as agitation of reactants. However, this leads to a contradiction where the ability to form emulsions using the reactants decreases and the transesterification reaction cannot be effectively performed.

Alternatively, a method in which an alkaline catalyst is used instead of the above-mentioned enzyme may also be employed. In this case as well, a reaction system with two liquid phases is adopted, and vigorous agitation is required for the reaction.

### Related Art Documents

### Non-Patent Documents

Non-Patent Document 1: M. Nordblad et al., Biotechnology and Bioengineering, 2014, Vol. 11, No. 12, pp.2446-2453

### Summary of Invention

### Problem to be Solved by the Invention

The present invention was made in order to solve the aforementioned problems, and it is an object thereof to provide a liquid sprinkling device and a reaction apparatus using the same that can reduce energy required for operations such as mixing and agitation of reactants in production of a reaction product.

### Means for Solving the Problem

The present invention provides a liquid sprinkling device comprising:
a rotating shaft disposed in a vertical direction; and
at least one liquid flowing member attached to the rotating shaft,
wherein the liquid flowing member includes an outlet located on an upper side, an inlet located on a lower side, and a tubular channel extending between the outlet and the inlet, and
the tubular channel is bent so that the outlet is pointed toward the lower side.

In one embodiment, the liquid sprinkling member is inclined so that the inlet is closer to an axis of the rotating shaft than the outlet is.

In one embodiment, an angle θ₂ between a direction in which the outlet is pointed and a horizontal direction is -90°≤θ₂<0° relative to the horizontal direction.

In one embodiment, wherein the tubular channel has a cylindrical cross section.

The present invention also provides a reaction apparatus comprising:
a reaction tank for containing a reaction liquid; and
a liquid sprinkling device provided in the reaction tank,
wherein (a) the liquid sprinkling device includes a rotating shaft disposed in a vertical direction, and at least one liquid flowing member attached to the rotating shaft,
   (b) the liquid flowing member includes an outlet located on an upper side, an inlet located on a lower side, and a tubular channel extending between the outlet and the inlet,
   (c) the tubular channel is bent so that the outlet is pointed toward the lower side,
   (d) an angle θ₂ between a direction in which the outlet is directed and a horizontal direction is -90°≤θ₂<0° relative to the horizontal direction, and
   (e) the inlet, the tubular channel, and the outlet have substantially the same inner diameter.

In one embodiment, the reaction liquid includes an oil phase and an aqueous phase.

In one embodiment, an end of the rotating shaft is located away from a liquid surface of the reaction liquid, and the liquid flowing member is attached to the rotating shaft via an attachment tool extending in the horizontal direction.

In one embodiment, the liquid flowing member is inclined so that the inlet is closer to an axis of the rotating shaft than the outlet is.

In one embodiment, the tubular channel has a cylindrical cross section.

### Effects of the Invention

With the liquid sprinkling device of the present invention, when the scooped reaction liquid is moved to a position above the liquid surface and is then sprinkled, the liquid flowing member is filled with the reaction liquid, thus making it possible to efficiently stir the reaction liquid while reducing power applied to the rotating shaft. This makes it possible to facilitate, with little power, the movement and circulation in the vertical direction of the liquid contained in the container in addition to agitation thereof due to the rotation in the horizontal direction. The liquid sprinkling device of the present invention can be incorporated into, for example, a reaction apparatus, thus making it possible to reduce energy for physical operations required to mix and agitate reactants in production of various reaction products. For example, when the reaction apparatus of the present invention contains a reaction liquid that includes two phases, namely an oil phase and an aqueous phase, the emulsification of the reaction liquid and/or the extraction of by-products (e.g., glycerin) with water can be facilitated without using extra power.

### Brief Description of Drawings

FIG. 1 is a schematic view showing an example of a reaction apparatus into which a liquid sprinkling device of the present invention is incorporated.
FIG. 2 is a cross-sectional view taken along the longitudinal direction that schematically shows an example of a second liquid flowing member of the liquid sprinkling device shown in FIG. 1.
FIG. 3 is a schematic view showing another example of a reaction apparatus into which a liquid sprinkling device of the present invention is incorporated.
FIG. 4 is a schematic view showing yet another example of a reaction apparatus into which a liquid sprinkling device of the present invention is incorporated.
FIG. 5 is a schematic view showing yet another example of a reaction apparatus into which a liquid sprinkling device of the present invention is incorporated.

### Description of Embodiments

The present invention will be described with reference to the attached drawings. Note that, in all of the diagrams described below, a configuration denoted by a certain reference numeral is identical to those denoted by the identical reference numeral in the other diagrams.

### Liquid Sprinkling Device and Reaction Apparatus

The following is a description of a liquid sprinkling device of the present invention using examples in which the liquid sprinkling device is incorporated into a reaction apparatus.

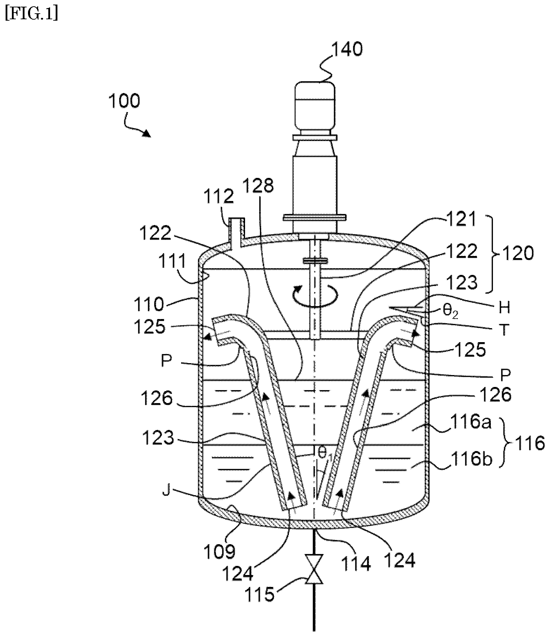

FIG. 1 is a schematic view showing an example of a reaction apparatus into which the liquid sprinkling device of the present invention is incorporated.

A liquid sprinkling device 120 of the present invention shown in FIG. 1 includes a rotating shaft 121 disposed in the vertical direction, and a liquid flowing member 123 attached to the rotating shaft 121 preferably via an attachment tool 122 extending in the horizontal direction. The liquid flowing member 123 includes an inlet 124, an outlet 125, and a tubular channel 126 extending between the inlet 124 and the outlet 125.

As shown in FIG. 1, in the liquid sprinkling device 120 of the present invention, the inlet 124 of the liquid flowing member 123 is located below a liquid surface 128 of a reaction liquid 116, and the outlet 125 of the liquid flowing member 123 is located above the liquid surface 128 of the reaction solution 116. As a result, the liquid sprinkling device 120 can, for example, draw the reaction liquid 116 contained in a reaction tank 110 as shown in FIG. 1 through the inlet 124 of the liquid flowing member 123 and allow the reaction liquid 116 to flow upward from the lower portion of the reaction tank 110 through the tubular channel 126, due to the rotation of the rotating shaft 121 and the centrifugal force caused by this rotation that is applied to the liquid flowing member 123. Then, the drawn reaction liquid is discharged from the outlet 125 of the liquid flowing member 123 at a position above the liquid surface 128.

Here, according to the general siphon principle, once a liquid is discharged from the exit (corresponding to the outlet according to the present invention) provided at a lower position in a state in which a tube is filled with the liquid, the liquid is drawn again through an entrance (corresponding to the inlet according to the present invention) provided at a higher position, and the liquid keeps moving from the entrance to the exit until all the liquid present at the entrance moves and no liquid remains, or bubbles are generated in the tube and thus cavitation begins.

Meanwhile, in the present invention, in the case where the reaction liquid is moved from the inlet 124 to the outlet 125 through the tubular channel 126 in the liquid flowing member 123, once the tubular channel 126 has been filled with the reaction liquid, the liquid sprinkling member 123 enables continuous movement of the reaction liquid through the tubular channel 126 that starts with drawing of the reaction liquid through the inlet 124 and ends with discharge of the reaction liquid from the outlet 125, as a tube used in the siphon principle, as long as the rotation of the rotating shaft 121 continues. In this specification, this continuous movement of the reaction liquid is referred to as "siphon-like" movement of the reaction liquid. In the present invention, once this siphon-like movement of the reaction liquid starts, the volume of the reaction liquid that moves per unit time (e.g., mL/second) will increase compared with the volume (e.g., mL/second) before the start of the continuous movement when the rotating shaft 121 is rotated at the same speed, thus making it possible to efficiently stir a large amount of reaction liquid.

The liquid sprinkling device 120 of the present invention enables the occurrence of the siphon-like movement of the reaction liquid through the inlet 124, the tubular channel 126, and the outlet 125, which are included in the liquid flowing member 123. As a result, once the siphon-like movement of the reaction liquid starts, the drawing of the reaction liquid through the inlet 124 and the discharge of the reaction liquid from the outlet 125 can be substantially continuously performed in the liquid flowing member 123 even if the rotating shaft 121 is rotated at a relatively reduced speed (i.e., even if the power required for rotation is reduced).

In the present invention, it is preferably that the locations of the inlet 124 and the outlet 125 with respect to the liquid surface 128 are kept in both the static stage (i.e., in the state in which the rotating shaft 121 is not rotated and the liquid surface of the reaction liquid 116 spreads in a substantially horizontal direction) and the stage where the rotating shaft 121 is rotated at the desired rotational speed (i.e., in the state in which the reaction liquid 116 is agitated as described below due to the rotation of the rotating shaft 121). As a result, the reaction liquid 116 in the reaction tank 110 can be easily drawn through the inlet 124 of the liquid flowing member due to the rotation of the rotating shaft 121 and the rotation of the liquid flowing member 123, and then the reaction liquid 116 can move to the outlet 125 through the tubular channel 126 in the liquid flowing member 123 due to centrifugal force and be discharged toward, for example, an inner wall 111 of the reaction tank 110 or the liquid surface 128 of the reaction liquid 116, from the outlet 125.

With the liquid sprinkling device 120 of the present invention, at least a portion of the tubular channel 126 is bent (as indicated by a bent portion P in FIG. 1), and the outlet 125 is pointed toward the lower side. As a result, the reaction liquid drawn through the inlet 124 of the liquid sprinkling device 120 is normally discharged toward a position lower than the outlet port 125 of the liquid sprinkling device 120 from the outlet 125 in the reaction tank 110.

Note that, in the liquid sprinkling device 120 shown in FIG. 1, one bent portion P is provided in one tubular channel 126, but the present invention is not particularly limited to this form as long as the outlet 125 is pointed toward the lower side (for example, toward a position lower than the horizontal direction). A plurality of bent portions may be provided in one tubular channel 126 as long as the outlet 125 is pointed toward the lower side. In the present invention, it is preferable that the bent portion P is curved in an arc shape in order to avoid or reduce the occurrence of undesired erosion in the bent portion.

Note that, in the description of the embodiment shown in FIG. 1, the liquid sprinkling device 120 with two liquid flowing members is used for the two-phase reaction liquid 116 that includes the oil phase 116a and the aqueous phase 116b, but the present invention is not limited to this configuration only. The liquid sprinkling device 120 is provided with at least one liquid flowing member or, for example, one, two, three, four, five, or six liquid flowing members. When the liquid sprinkling device 120 includes a plurality of liquid sprinkling members, it is preferable that liquid sprinkling members are disposed at substantially equal angular intervals in the rotational direction about the rotating shaft in order to achieve smooth rotation.

The rotating shaft 121 is a shaft with predetermined rigidity, and has, for example, a cylindrical shape or a columnar shape. The rotating shaft 121 is normally disposed in the vertical direction in the reaction tank 110. The thickness of the rotating shaft 121 is, for example, 8 mm to 200 mm, but is not necessarily limited thereto. The length of the rotating shaft 121 varies depending on the size of the reaction tank 110 used, etc., and an appropriate length can be selected by a person skilled in the art.

One end of the rotating shaft 121 is connected to a rotating means such as a motor 140 in an upper portion of the reaction tank 110. The other end of the rotating shaft 121 is not connected to the bottom 109 of the reaction tank 110 and is, for example, disposed away from the bottom 109 of the reaction tank 110 at a fixed distance (and is preferably separated from the liquid surface 128 of the reaction liquid 116). This reduces the likelihood of the rotating shaft 121 coming into contact with the reaction liquid 116. Alternatively, the other end of the rotating shaft may be housed in a bearing provided on the bottom 109 of the reaction tank.

In the liquid sprinkling device 120 shown in FIG. 1, the liquid flowing member 123 is inclined such that the inlet 124 of the liquid flowing member 123 is closer to an axis J of the rotating shaft 121 than the outlet 125 is. In other words, in the liquid sprinkling device 120, the liquid flowing member 123 is inclined such that the shortest distance between the inlet 124 of the liquid flowing member 123 and the axis J of the rotating shaft 121 is shorter than the shortest distance between the outlet 125 and the axis J of the rotating shaft 121.

Alternatively, in the liquid sprinkling device 120 shown in FIG. 1, the liquid flowing member 123 is attached so as to be inclined at a predetermined angle (also referred to as an attachment inclination angle) θ₁ relative to the axial direction of the rotating shaft 121. The attachment inclination angle θ₁ can be set to any angle by a person skilled in the art, and is, for example, 5° to 45° and preferably 10° to 25°.

In the present invention, the liquid flowing member 123 is processed so as to have, for example, a tubular shape (e.g., a shape of a cylinder, an oval tube, or a polygonal tube) as a whole.

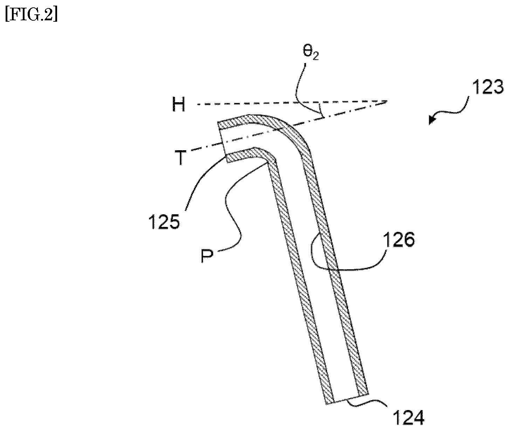

The size of the liquid flowing member 123 is not particularly limited. FIG. 2 is a cross-sectional view taken along the longitudinal direction that schematically shows an example of a second liquid flowing member of the liquid sprinkling device shown in FIG. 1. For example, when a cylindrical member is used as the liquid sprinkling member 123, the inner diameter thereof is, for example, 2 mm to 200 mm. The length from the inlet 124 to the bent portion P is not particularly limited, and an appropriate length can be selected by a person skilled in the art. Note that, in FIG. 2, the inlet 124, the tubular passage 126, and the outlet 125 appear to have substantially the same inner diameter, but the present invention is not limited to only this form. For example, the inner diameter of the liquid flowing member 123 may decrease from the inlet 124 toward the outlet 125 via the bent portion P in a gradual or stepwise manner.

Furthermore, in the liquid flowing member 123 shown in FIG. 2, an angle θ₂ between a direction T in which the outlet 125 is pointed and a horizontal direction H is -90°≤θ₂<0° in an example, or alternatively -60°≤θ₂<-1° in another example, relative to the horizontal direction. If the angle θ₂ is smaller than -90°, the reaction liquid may flow backward in the liquid flowing member and not be effectively discharged from the outlet in some cases. If the angle θ₂ exceeds 0°, the siphon-like movement of the reaction liquid does not occur even if the tubular passage 120 is filled with the reaction liquid due to the rotation as described later, and as a result, it may be difficult to reduce the power applied to the reaction apparatus.

The liquid sprinkling device 120 of the present invention can also be used in a state of being incorporated into a mixing tank or an agitation tank of a mixing apparatus or an agitation apparatus that is used when contents need to be physically mixed or agitated, in addition to the reaction tank 110 of the reaction apparatus 100 as shown in FIG. 1.

Next, a reaction apparatus into which the liquid sprinkling device of the present invention is incorporated will be described with reference to FIG. 1 again.

A reaction apparatus 100 of the present invention includes the reaction tank 110 and the above-described liquid sprinkling device 120.

The reaction tank 110 is a tank capable of being hermetically sealed in which the reaction liquid 116 can be contained and agitated, and includes a bottom 109 that is in the form of, for example, a flat bottom, a round bottom, a conical bottom, or a bottom inclined downward.

The size (capacity) of the reaction tank 110 is determined as appropriate depending on the intended use of the reaction apparatus 100 (e.g., the type of reaction to be performed using it), the amount of the reaction liquid to be processed, or the like, and is therefore not necessarily limited, but is, for example, 0.1 liters to 1,000,000 liters.

In one embodiment, the reaction tank 110 also includes a reaction liquid feed port 112 and a product outlet 114. The reaction liquid feed port 112 is an inlet for supplying a fresh reaction liquid 116 to the reaction tank 110. The reaction liquid feed port 112 is provided, for example, in the upper portion (e.g., a top lid) of the reaction tank 110. Alternatively, the reaction liquid feed port 112 may be provided in the side portion of the reaction tank 110. The number of reaction liquid feed ports 112 provided in the reaction tank 110 is not limited to one. For example, a plurality of reaction liquid feed ports may be provided in the reaction tank 110.

The product outlet 114 is an outlet for extracting a product obtained in the reaction tank 110 from the reaction tank 110. A reaction residue, a waste liquid, and the like can also be discharged from the product outlet 114 in addition to the product, and the discharge can be regulated by, for example, opening and closing a valve 115 provided downstream of the product outlet 114. Also, the product outlet 114 passes through, for example, the center of the bottom 109 of the reaction tank 110.

The upper portion of the reaction tank 110 may have a structure capable of being opened and closed, such as a lid or a maintenance hole. In addition, the upper portion of the reaction tank 110 may be provided with a pressure regulation hole (not illustrated) for regulating the pressure inside the reaction tank 110. Furthermore, the pressure regulation hole may be connected to, for example, a decompression pump (not illustrated).

The reaction liquid 116 contained in the reaction tank 110 is a liquid such as an aqueous solution or a slurry. When the reaction apparatus 100 is used to, for example, produce a fatty acid ester through a transesterification reaction, which will be described later, the reaction liquid 116 is, for example, a two-phase reaction liquid that includes the oil phase 116a and the aqueous phase 116b, and each of the oil phase 116a and the aqueous phase 116b contains a reactant such as a starting material and a medium such as a solvent.

With the reaction apparatus 100 shown in FIG. 1, the rotation of the rotating shaft 121 allows the liquid flowing member 123 in the liquid sprinkling device 120 to draw the reaction liquid 116 through the inlet port 124. The drawn reaction liquid moves to the outlet port 125 through the tubular passage 126 due to the centrifugal force caused by the rotation of the rotating shaft 121, and is discharged into the reaction tank 110 from the outlet port 125, specifically to a portion above the liquid surface 128 of the reaction liquid 116 in the reaction tank 110. In addition, when the tubular channel 126 is completely filled with the reaction liquid due to continuous rotation of the rotating shaft 121, it is possible to cause the "siphon-like" movement of the reaction liquid through the inlet 124, the tubular channel 126, and the outlet 125. At this time, even if the rotational speed of the rotating shaft 121 is reduced, this "siphon-like" phenomenon continues due to hysteresis. This allows the reaction liquid 116 to collide against the inner wall 111 of the reaction tank 110 and the liquid surface 128 and to move upward from the bottom 109 of the reaction tank 110, thus making it possible to facilitate the stirring of the reaction liquid 116 in the height direction of the reaction tank 110 (e.g., agitation or circulation thereof in the vertical direction) by rotating the rotating shaft 121 at a reduced speed (or, by using less power). As a result, the production of a reaction product carried out in the reaction apparatus 100 can proceed more effectively.

Note that, in the present invention, the above-described reaction tank 110, rotating shaft 121, attachment tool 122, and liquid flowing member 123 are independently made of, for example, a metal such as iron, stainless steel, Hastelloy, or titanium, or a material composed of a combination thereof. These members may be provided with a coating known in the art, such as Teflon (registered trademark), glass lining, or rubber lining, in order to enhance chemical resistance.

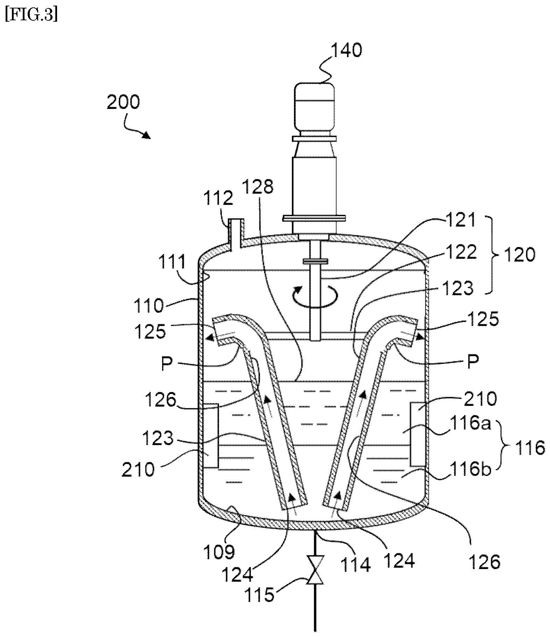

FIG. 3 is a schematic view showing another example of the reaction apparatus of the present invention. In a reaction apparatus 200 of the present invention shown in FIG. 3, the inner wall 111 of the reaction tank 110 is provided with a plurality of baffle plates 210 that each extend from the bottom 109 of the reaction tank 110 to a position above the liquid surface 128 of the reaction liquid 116. In FIG. 3, each of the baffle plates 210 is provided so as to be located, for example, at substantially the center of the reaction solution 116 in a static state (i.e., the upper end of the baffle plate 210 is located inside the oil phase 116a, the lower end of baffle plate 210 is located inside the aqueous phase 116b, and the upper end and the lower end are located near the interface between the oil phase 116a and the aqueous phase 116b).

The baffle plates 210 play a role in preventing the reaction liquid 116 in the reaction tank 110 from following the rotation of the liquid flowing member 123 caused by transmission of the rotational movement of the rotating shaft 121 via the attachment tool 122, and thus rotating together. In other words, the baffle plates 210 act as barriers to the horizontal rotation of the reaction liquid 116 in the reaction tank 110, thus making it possible to prevent the formation of a vortex. As a result, irregular motion of the reaction liquid 116 is caused in the reaction tank 110, resulting in not only the above-described "siphon-like" phenomenon occurring through the inlet 124, the normal channel 126, and the outlet 125 of the liquid flowing member 123 included in the liquid sprinkling device 120, but also an improvement in the efficiency of mixing and agitating the reaction liquid 116.

In the reaction apparatus 200 of the present invention, the number of baffle plates 210 provided in the reaction tank 110 is not necessarily limited, but one to eight baffle plates are provided on the inner wall 111 of the reaction tank 110 at substantially regular intervals, for example.

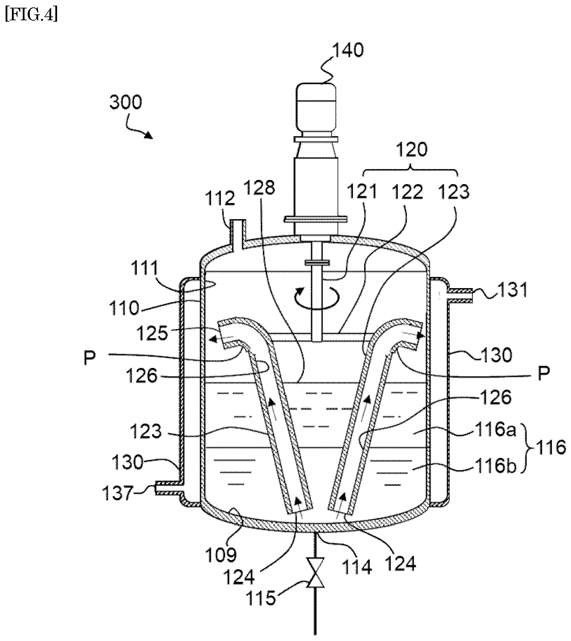

FIG. 4 is a schematic view showing yet another example of the reaction apparatus of the present invention. In a reaction apparatus 300 shown in FIG. 4, a jacket 310 for temperature adjustment is provided on the outer circumference of the reaction tank 110. In FIG. 4, the jacket 310 is made of, for example, a hollow material, and a heat medium such as steam or heat transfer oil can be introduced through a tube (not illustrated) via a jacket inlet 320 and discharged via a jacket outlet 330. The heat medium introduced into the jacket 310 applies heat to the reaction liquid 116 from the outside of the reaction tank 110, thus making it possible to control the temperature of the reaction liquid 116 in the reaction tank 110.

Note that, in the description of the embodiment shown in FIG. 4, an example is described in which a heating heat medium for heating the inside of the reaction tank 110 is used as the heat medium, but the present invention is not limited to this configuration. For example, instead of the heating heat medium, a cooling heat medium such as liquefied nitrogen, water, brine, or a gas coolant (e.g., carbon dioxide or chlorofluorocarbon) may also be introduced into the jacket 310.

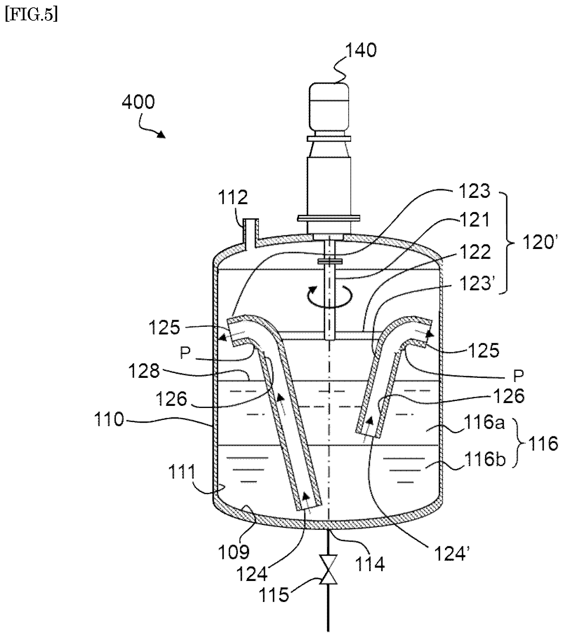

FIG. 5 is a schematic view showing yet another example of the reaction apparatus of the present invention. In a reaction apparatus 400 shown in FIG. 5, two types of liquid flowing members 123 and 123' that differ in length are used, and a liquid sprinkling device 120' includes the liquid flowing members 123 and 123', the rotating shaft 121, and the attachment tool 122.

In the reaction apparatus 400 shown in FIG. 5, the inlets 124 and 124' of the liquid flowing members 123 and 123' included in the liquid sprinkling device 120' are located at different heights. For example, as shown in FIG. 5, in the static state (i.e., the state in which the rotating shaft 121 is not rotated), the inlet 124 of the liquid flowing member 123 may be located in the aqueous phase 116b of the reaction liquid 116, and the inlet 124' of the liquid flowing member 123' may be located in the oil phase 116a of the reaction liquid 116. Due to the inlets 124 and 124' of the liquid flowing members 123 and 123' being located as described above, different components can be contained in the reaction liquid 116 drawn through the inlet 124 and the reaction liquid 116 drawn through the other inlet 124' when rotating the rotating shaft 121. Specifically, it is possible to, for example, draw the components (aqueous phase components) contained in the aqueous phase 116b of the reaction liquid 116 in a relatively larger amount through the inlet 124 of the liquid flowing member 123. On the other hand, it is possible to, for example, draw the components (oil phase components) contained in the oil phase 116a of the reaction liquid 116 in a relatively larger amount through the inlet 124' of the liquid flowing member 123'.

The reaction apparatus into which the liquid sprinkling device of the present invention is incorporated is useful in the production of various reaction products that require agitation of a reaction liquid (reactants). In particular, in a two-phase system (heterogeneous reaction system) that includes an oil phase and an aqueous phase, a reaction product can be obtained more effectively compared with the case where a conventional agitator is used. Examples of such a two-phase system include transesterification reactions to produce fatty acid esters.

### Method for Producing Reaction Product

The following describes a method for producing a predetermined reaction product using a reaction apparatus into which the liquid sprinkling device of the present invention is incorporated.

In the production method of the present invention, agitation is performed by circulating a reaction liquid in a reaction apparatus into which the above-described liquid sprinkling device is incorporated. The term "agitation through circulation" as used herein encompasses both agitation caused by rotating a target liquid (e.g., reaction liquid) in the horizontal direction, and stirring (or mixing) of the entire liquid caused by movement and circulation of the liquid in the vertical direction as in the case of using the above-described reaction apparatus.

A reaction liquid used in the present invention contains an inorganic or organic liquid medium, and in general, a chemical reaction in the reaction liquid can proceed and be controlled through agitation using an agitator or the like. For example, the reaction liquid is a heterogeneous reaction liquid. For example, a reaction liquid that includes an oil phase and an aqueous phase is useful in that emulsification of the reaction liquid can be improved and accelerated by the agitation through circulation.

When the reaction liquid is a heterogeneous reaction liquid, the reaction liquid contains, for example, a raw material oil or fat, a liquid enzyme, an alcohol having 1 to 8 carbon atoms, and water.

The raw material oil or fat is, for example, an oil or fat that can be used to produce a fatty acid ester for biodiesel fuel. The raw material oil or fat may be a preliminarily refined oil or fat or may be an unrefined oil or fat containing impurities. Examples of the raw material oil or fat include cooking oils and fats, waste cooking oils and fats, crude oils, and other waste matter-based oils and fats, as well as combinations thereof. Examples of the cooking oils and fats and waste cooking oils and fats include vegetable oils and fats, animal oils and fats, fish oils, oils and fats produced by microorganisms, and waste oils thereof, as well as mixtures (mixed oils and fats) thereof. Examples of the vegetable oils and fats include soybean oil, rapeseed oil, palm oil, and olive oil, but are not necessarily limited thereto. Examples of the animal oils and fats include beef tallow, lard, chicken fat, whale oil, and mutton tallow, but are not necessarily limited thereto. Examples of the fish oils include sardine oil, tuna oil, and squid oil, but are not necessarily limited thereto. Examples of the oils and fats produced by microorganisms include oils and fats produced by microorganisms belonging to the genus Mortierella, the genus Schizochytrium, or the like, but are not necessarily limited thereto.

Examples of the crude oils include unrefined or unprocessed oils and fats that are obtained from a conventional oil expression step for cooking oils and fats, and the crude oils may contain, for example, gum-like impurities, such as phospholipids and/or proteins, free fatty acids, pigments, trace metals, and other hydrocarbon impurities that are soluble in oil, as well as combinations thereof. The amount of impurities contained in a crude oil is not particularly limited.

Examples of the waste matter-based oils and fats include oil foots obtained as a result of refining, in the presence of an alkali, raw oil that is produced during the production of a food oil or fat, heat-treated oil, press oil, and rolling oil, as well as combinations thereof.

The raw material oil or fat may contain water in any amount, as long as the water does not inhibit the inherent characteristics of the oil or fat. Furthermore, an unreacted oil or fat remaining in a solution that has been used in a separate reaction for forming a fatty acid ester may also be used as the raw material oil or fat.

With regard to the liquid enzyme in the present invention, enzyme catalysts that have the properties of a liquid at room temperature, of any enzyme catalyst that can be used for a fatty acid ester generating reaction can be used. Examples of the liquid enzyme include lipase, cutinase, and combinations thereof. Here, the term "lipase" as used herein refers to an enzyme that has the ability to act on a glyceride (also called acylglycerol) and degrade the glyceride into glycerin or a partial glyceride and a fatty acid, and also has the ability to generate a fatty acid ester via transesterification in the presence of a linear lower alcohol.

In the present invention, the lipase may be 1,3- specific or may be nonspecific. In terms of the capability of producing a linear lower alcohol ester of a fatty acid, it is preferable that the lipase is nonspecific. Examples of the lipase include lipases derived from filamentous fungi belonging to the genus Rhizomucor (Rhizomucor miehei), the genus Mucor, the genus Aspergillus, the genus Rhizopus, the genus Penicillium, and the like; lipases derived from yeasts belonging to the genus Candida (Candida antarcitica, Candida rugosa, and Candida cylindracea), Pichia, and the like; lipases derived from bacteria belonging to the genus Pseudomonas, the genus Serratia, and the like; and lipases derived from animals, such as pig pancreas. A liquid lipase can be obtained by, for example, concentrating and refining a culture solution of any of the above-described microorganisms containing lipase produced by that microorganism or by dissolving powdered lipase in water. A commercially available liquid lipase can also be used.

The amount of the above-described liquid enzyme used in the present invention varies depending on, for example, the type and/or amount of raw material oil or fat and is therefore not necessarily limited, but may be preferably 0.1 parts by mass to 50 parts by mass, and preferably 0.2 parts by mass to 30 parts by mass, relative to 100 parts by mass of raw material oil or fat that is used. If the amount of liquid enzyme that is used is less than 0.1 parts by mass, an effective transesterification reaction cannot be catalyzed, and there is thus a risk that the yield and/or the percentage yield of a desired fatty acid ester may be reduced. If the amount of liquid enzyme that is used exceeds 50 parts by mass, the yield and/or the percentage yield of the desired fatty acid ester that is obtained through the transesterification reaction no longer changes, but rather there is a risk that the production efficiency may be reduced.

The alcohol in the present invention is a linear or branched lower alcohol (e.g., an alcohol having 1 to 8 carbon atoms, and preferably an alcohol having 1 to 4 carbon atoms). A linear lower alcohol is preferable. Examples of the linear lower alcohol include methanol, ethanol, n-propanol, and n-butanol, as well as combinations thereof, but are not necessarily limited thereto.

The amount of the above-described alcohol that is used varies depending on, for example, the type and/or amount of raw material oil or fat that is used and is therefore not necessarily limited, but may be preferably 5 parts by mass to 100 parts by mass, and preferably 10 parts by mass to 30 parts by mass, relative to 100 parts by mass of raw material oil or fat. If the amount of alcohol that is used is less than 5 parts by mass, an effective transesterification reaction cannot be performed, and thus there is a risk that the yield and/or the percentage yield of a desired fatty acid ester will be reduced. If the amount of alcohol that is used exceeds 100 parts by mass, the yield and/or the percentage yield of the desired fatty acid ester that is obtained through the transesterification reaction no longer changes, but rather there is a risk that the production efficiency will be reduced.

Water that is used in the present invention may be any of distilled water, ion-exchanged water, tap water, and pure water. The amount of the above-described water that is used varies depending on, for example, the type and/or amount of raw material oil or fat that is used and is therefore not necessarily limited, but may be preferably 0.1 parts by mass to 50 parts by mass, and preferably 2 parts by mass to 30 parts by mass, relative to 100 parts by mass of raw material oil or fat. If the amount of water that is used is less than 0.1 parts by mass, the amount of the water layer formed in the reaction system is insufficient, making it impossible for an effective transesterification reaction using the above-described raw material oil or fat, liquid enzyme, and alcohol to occur, and thus there is a risk that the yield and/or the percentage yield of a desired fatty acid ester will be reduced. If the amount of water that is used exceeds 50 parts by mass, the yield and/or the percentage yield of the desired fatty acid ester that is obtained through the transesterification reaction no longer changes, but rather there is a risk that the production efficiency will be reduced.

In the production method of the present invention, a predetermined electrolyte may be added to the above-described reaction liquid. Examples of anions constituting an electrolyte include hydrogen carbonate ions, carbonate ions, chloride ions, hydroxide ions, citrate ions, hydrogen phosphate ions, dihydrogen phosphate ions, and phosphate ions, as well as combinations thereof, but are not necessarily limited thereto. Examples of cations constituting the electrolyte include alkali metal ions and alkaline earth metal ions as well as combinations thereof, and more specifically include sodium ions, potassium ions, and calcium ions as well as combinations thereof. In the present invention, examples of the electrolyte include sodium hydrogen carbonate (baking soda), sodium carbonate, calcium chloride, calcium hydroxide, trisodium citrate, sodium hydrogen phosphate, sodium dihydrogen phosphate, sodium chloride, and trisodium phosphate, as well as combinations thereof. Sodium hydrogen carbonate (baking soda) is more preferable because it is versatile and easily available, for example.

In the present invention, the above-described raw material oil or fat, catalyst, and alcohol, as well as the above-described water are added into, for example, the reaction tank 110 of the reaction apparatus 100 shown in FIG. 1 through the reaction liquid feed port 112 simultaneously or in any order, and form the reaction liquid 116 that includes the oil phase 116a and the aqueous phase 116b. Then, the liquid flowing member 123 of the liquid sprinkling device 120 is rotated in the reaction tank 110 due to the rotation of the rotating shaft 121, thereby, as described above, drawing the reaction liquid 116 through the inlet 124 of the liquid flowing member 123, allowing the drawn reaction liquid to move upward through the tubular channel 126 due to the above-described "siphon-like" phenomenon occurring through the inlet 124, the normal channel 126, and the outlet 125 included in the liquid flowing member 123 included in the liquid sprinkling device 120, and discharging the reaction liquid from the outlet port 125 of the liquid flowing member 123. This movement of the reaction liquid 116 facilitates agitation of the reaction liquid 116, and a reaction product fatty acid ester is produced. The temperature applied to the reaction tank 110 is not necessarily limited, but is, for example, 5°C to 80°C, preferably 15°C to 80°C, and more preferably 25°C to 50°C.

Note that, in the present invention, the rotating shaft in the reaction apparatus 100 need not necessarily be rotated at a high speed (e.g., 600 rpm or higher). For example, the rotating shaft may be rotated at a low speed (e.g., 80 rpm or higher and lower than 300 rpm) or at a medium speed (e.g., 300 rpm or higher and lower than 600 rpm). Furthermore, the reaction time varies depending on the amounts of a raw material oil or fat, a catalyst, an alcohol, and water that are used and is therefore not necessarily limited, and a person skilled in the art can set any desired period of time.

After the completion of the reaction, a reaction product and a reaction residue are extracted from the reaction tank 110 of the reaction apparatus 100, and are then separated into a layer containing the fatty acid ester and a layer containing the by-product glycerin by using, for example, a method that is well-known to a person skilled in the art. After that, the layer containing the fatty acid ester can be further subjected to isolation and refining of the fatty acid ester by using a method that is well-known to a person skilled in the art, as necessary.

The fatty acid ester that is obtained in the above-described manner can be used as, for example, biodiesel fuel or a constituent component thereof.

### List of Reference Numerals

- 100, 200, 300, 400: Reaction apparatus
- 109: Bottom
- 110: Reaction tank
- 111: Inner wall
- 112: Reaction liquid feed port
- 114: Product outlet
- 115: Valve
- 116: Reaction liquid
- 116a: Oil phase
- 116b: Aqueous phase
- 120: Liquid sprinkling device
- 121: Rotating shaft
- 122: Attachment tool
- 123, 123': Liquid flowing member
- 124, 124': Inlet
- 125: Outlet
- 126: Tubular channel
- 128: Liquid surface
- 140: Motor
- 210: Baffle plate
- 310: Jacket
- 320: Jacket inlet
- 330: Jacket outlet

## Claims

1. A liquid sprinkling device comprising:
a rotating shaft disposed in a vertical direction; and
at least one liquid flowing member attached to the rotating shaft,
wherein the liquid flowing member includes an outlet located on an upper side, an inlet located on a lower side, and a tubular channel extending between the outlet and the inlet, and
the tubular channel is bent so that the outlet is pointed toward the lower side.

2. The liquid sprinkling device according to claim 1, wherein the liquid sprinkling member is inclined so that the inlet is closer to an axis of the rotating shaft than the outlet is.

3. The liquid sprinkling device according to claim 1 or 2, wherein an angle θ₂ between a direction in which the outlet is pointed and a horizontal direction is -90°≤θ₂<0° relative to the horizontal direction.

4. The liquid sprinkling device according to any one of claims 1 to 3, wherein the tubular channel has a cylindrical cross section.

5. A reaction apparatus comprising:
a reaction tank for containing a reaction liquid; and
a liquid sprinkling device provided in the reaction tank,
wherein (a) the liquid sprinkling device includes a rotating shaft disposed in a vertical direction, and at least one liquid flowing member attached to the rotating shaft,
(b) the liquid flowing member includes an outlet located on an upper side, an inlet located on a lower side, and a tubular channel extending between the outlet and the inlet,
(c) the tubular channel is bent so that the outlet is pointed toward the lower side,
(d) an angle θ₂ between a direction in which the outlet is directed and a horizontal direction is -90°≤θ₂<0° relative to the horizontal direction, and
(e) the inlet, the tubular channel, and the outlet have substantially the same inner diameter.

6. The reaction apparatus according to claim 5, wherein the reaction liquid includes an oil phase and an aqueous phase.

7. The reaction apparatus according to claim 5 or 6, wherein an end of the rotating shaft is located away from a liquid surface of the reaction liquid, and the liquid flowing member is attached to the rotating shaft via an attachment tool extending in the horizontal direction.

8. The reaction apparatus according to any one of claims 5 to 7, wherein the liquid flowing member is inclined so that the inlet is closer to an axis of the rotating shaft than the outlet is.

9. The reaction apparatus according to any one of claims 5 to 8, wherein the tubular channel has a cylindrical cross section.
